Europäisches Patentamt

European Patent Office

Office européen des brevets

(19)

(11) Publication number: **0 015 654**
**B1**

(12) **EUROPEAN PATENT SPECIFICATION**

(45) Date of publication of patent specification: **12.10.83**

(21) Application number: **80300371.4**

(22) Date of filing: **07.02.80**

(51) Int. Cl.³: **B 63 B 9/00, B 63 H 21/30, G 01 B 11/27, G 01 C 15/00**

(54) Method for positional setting of constructional components of a ship's propulsion unit.

(30) Priority: **08.02.79 GB 7904480**

(43) Date of publication of application:
**17.09.80 Bulletin 80/19**

(45) Publication of the grant of the patent:
**12.10.83 Bulletin 83/41**

(84) Designated Contracting States:
**DE FR IT NL**

(56) References cited:
**FR - A - 2 013 208**
**GB - A - 967 975**
**GB - A - 1 265 143**
**US - A - 3 704 522**
**US - A - 3 762 820**

**SHIPBUILDING AND SHIPPING RECORD, 29th April 1954, pages 542—544 IPC INDUSTRIAL PRESS LTD.,**
**London, G.B.**
**G. YELLOWLEY: "Marine Shafting Alignment"**

(73) Proprietor: **THE RANK ORGANISATION LIMITED**
**11 Hill Street**
**London W1X 8AE (GB)**

(72) Inventor: **Best, William John**
**Wood Ville Coxgreen**
**Sunderland Tyne & Wear, SR4 9JU (GB)**

(74) Representative: **Cullis, Roger et al,**
**c/o H.G. Amann Patents Manager The Rank Organisation Limited 439 Godstone Road Whyteleafe, Surrey, CR3 OYG (GB)**

(56) References cited:
**INSTRUMENTS & AUTOMATION, October 1954, pages 1634, 1635, Chilton Cy. Radnor, U.S.A. P.A. 19089**
**A. METZ: "Principles and applications of alignment telescopes"**

Courier Press, Leamington Spa, England

# Method for positional setting of constructional components of a ship's propulsion unit

This invention relates to marine construction and in particular to the pre-alignment of components of a ship's propulsion unit.

In ship construction the traditional methods of alignment of machinery and shafting in a ship require all the requisite components to be installed in the ship before final alignment can be achieved. Alignment of a propeller shaft with an engine is achieved by first establishing a line of sight, either optically or using piano wire, then boring out the stern frame in which the aft end of the propeller shaft is eventually supported. This is followed by machining and fitting of a stern tube and a propeller and shafting which are supported in the stern tube, and finally coupling the forward end of the propeller shaft with coupling flanges on the engine drive shaft, using mechanical means to adjust the setting of the engine to ensure alignment of the engine shaft with the propeller shaft.

When aligning machinery by the traditional method any small alignment errors made either at the stern tube or at the engine will be very troublesome as the work of lining up the intermediate shafting proceeds, and it may be necessary to move the engine from its designed position. Furthermore, since alignment of the machinery depends on all the components being in position, delay in the delivery of any one component can delay the finishing of the vessel and possibly its eventual delivery. Ancillary work such as the building of ladderways and the walkways cannot be completed, and the fitting of oil and fuel lines and cooling water pipes cannot even be commenced, until all the main propelling components of the ship's machinery are in place, so that even when alignment of the machinery has been achieved, completion of the installation work will then take several more weeks.

It is known to make provision in ship construction for the height adjustment and alignment of installed machinery using, for example, adjustable elements such as wedges, as described, for example, in the paper by G. Yellowley entitled "marine Shafting alignment", in "Shipbuilding and Shipping Record", April 1954.

An object of the present invention is to provide a method of construction in which alignment and the three-dimensional positioning of components of the propulsion machinery of a ship under construction, can be effected accurately without all the components having to be in place, and with minimal on-site adjustments.

According to the present invention there is provided in one aspect a method of steel ship construction in which adjustable elements are used to adjust the height and alignment of a propulsion machinery component such as an engine bedplate installed in the hull of the ship, characterised in that, when the hull of the ship has been partially completed, the precise location of the propulsion machinery component such as an engine bedplate is predetermined in three dimensions, before the fitting of such component, by making length and height measurements on the component, outside the hull, and measurements in the hull itself, the measurements on the component and in the hull being combined, for example by subtraction, to determine the size and location of forward and aft end stoppers, lateral stoppers and height adjustment elements, and in which, following the positioning of the stoppers and height adjustment elements, propeller shafting and ancillary equipment are fitted and aligned in the hull under construction before the final location and alignment of the propulsion machinery component at the predetermined location.

Once each stopper or adjustment element has been positioned the position of the component in the hull is predetermined and if necessary further construction and building work can proceed, even if the dependent alignment components are not actually installed — due, for example, to delay in the delivery of the component.

The method of the invention enables the height, the longitudinal (forward and aft) position and the lateral (port and starboard) position of machinery in the hull of a ship under construction to be predetermined at an advantageous stage in the construction of a ship.

The or each measurement made on the structure may be made using rules, but for the best results an optical alignment apparatus is employed. For example, optical sights may be located at selected positions in the structure at which measurements are made and may be aligned with each other using a telescope mounted on a table the axis of which is capable of tilt adjustment.

An optical alignment method of the present invention is particularly advantageous in determining the height of machinery for installation on the tank top of a ship under construction, in which case a sighting line corresponding to the axis of a propeller shaft or an engine crankshaft is determined by an optical sighting method and an optical sweep is then made in a plane substantially parallel to the sighting line to measure the distances from the sighting line of a number of machinery support positions on the tank top, measurements are made on a support base of the machinery before its installation to establish the height relative to the sighting line of the machinery base at each support position, and bearing height adjustment elements are selected, each having a height determined from said measurements on the support base and from the optical sweep measurements, the said adjustment elements being located at the appropriate support positions to predetermine a correctly aligned position of the machinery under the subsequent installation of the machinery base on the tank top.

Preferably the measurements made on the machinery support base before its installation include measurements at a forward and aft reference position, these measurements being subtracted from the height of the sighting line at these positions measured in the optical sweep to obtain forward and aft reference heights of the base above the tank top.

When carrying out the method of the invention on a vessel under construction the hull construction must be sufficiently far advanced to permit of alignment checks without danger of subsidence or settlement. Typically this would apply when the hull has been fully welded from the top of the stern frame to the main deck level and for about three holds or compartments forward of the stern. The position or alignment checking method should be completed before preparations are commenced to transfer the weight of the vessel from keel blocks onto launching ways, such preparations being usually started about two weeks before launch.

The invention will be further described by way of example, with reference to the accompanying drawings, in which:

Figure 1 is a purely diagrammatic longitudinal section of part of the hull of a ship under construction showing positions at which optical alignment sights are located;

Figure 2 is a longitudinal section, on an enlarged scale, of part of a bedplate on which machinery is supported in the ship's hull;

Figure 3 is a plan view of the bedplate showing machinery support points and a suggested position of an optical scanning device.

Figure 4 is an exaggerated longitudinal section illustrating the optical alignment method for determining the base height and bobbin measurement of the machinery and its bedplate in the ship's hull;

Figure 5 shows diagrammatically side elevations of three different types of element which may be used in the method described with reference to Figures 3 and 4;

Figure 6 is a diagrammatic longitudinal section of part of the hull of a ship under construction illustrating a method of determination of the forward and aft position of the machinery in the hull;

Figure 7 is a diagrammatic sectional view of one of the adjustable stoppers used in the positioning of an engine bedplate by the method of the present invention, and

Figure 8 is a longitudinal section, on a grossly enlarged scale, of part of the stern frame of a ship under construction, illustrating a method of correcting for misalignment of the bore in the stern frame relative to the axis of the propeller shaft.

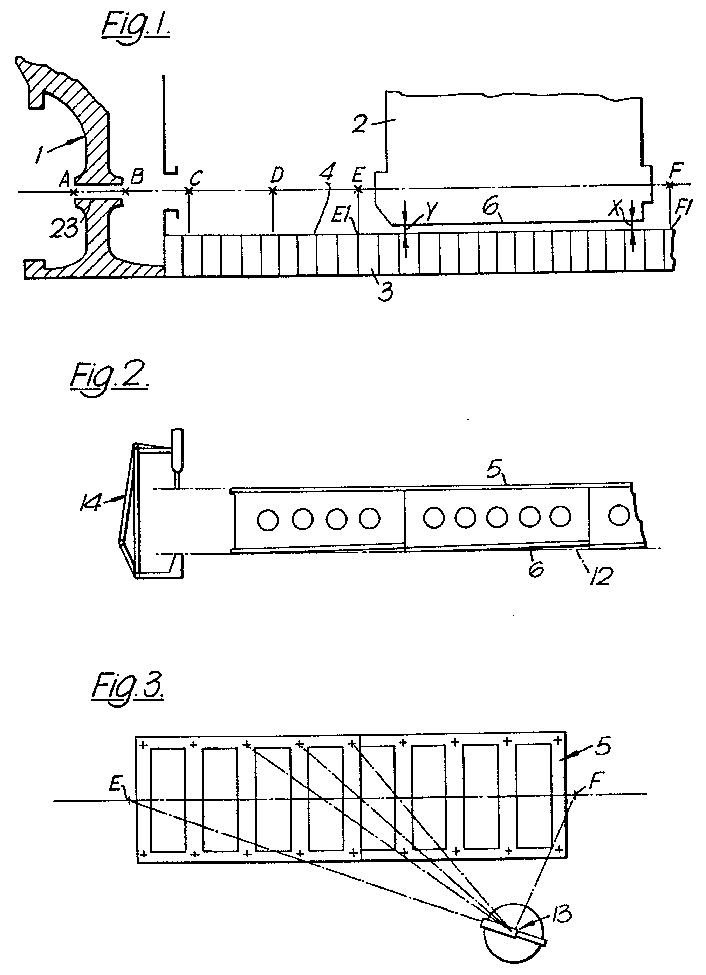

At a stage in the construction of a ship after the welding of the hull from the stern to the main deck level at least two holds or compartments forward from the stern, optical sights are set up at a number of points, labelled A to F, between the after end A of the stern frame 1 to the forward end F of the main propulsion unit 2 (Figure 1). A special adaptor is used to ensure that the sight at F is coaxial with the sight line AF, while another special adaptor at E is fully adjustable in all directions, enabling it also to be set coaxial with the sight line AF. Optical alignment of the sights at A to F along a line coinciding with the propeller shaft and the drive shaft of the propulsion unit is effected by means of a telescope, laser beam or other optical means, before the mounting of machinery on the double bottom 3 of the hull of the ship under construction, to establish a number of height measurements of the sight line above the upper surface 4 of the double bottom 3, usually referred to as the 'tank top'.

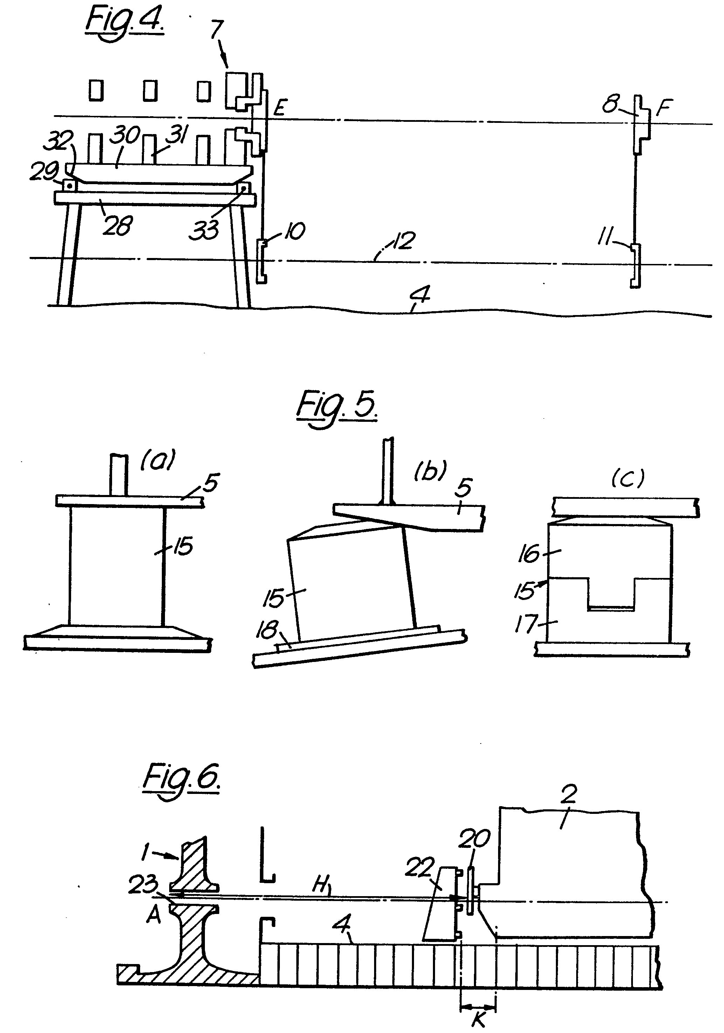

Before machinery such as the propulsion unit 2 is installed in the ship measurements are made upon the bedplate 5 which supports the unit 2. The bedplate 5 is made up of a number of interconnected sections the base surfaces of which are usually machined at an early stage of manufacture of the engine and are not in general coplanar. The distance of the axis of the propulsion unit drive shaft, that is, the crankshaft where the propulsion unit is a reciprocating engine, above the base surface 6 of the bedplate 5 is measured by mechanical or optical means at the after and forward points of the bedplate. These distances are subtracted from the height of the points E and F above the tank top 4, as obtained from a preliminary optical sweep of the sights set up at points A to F to obtain forward and aft bedplate clearance dimensions X and Y (Figure 1) which will in general be different from each other. Two special distance gauges 7 and 8 (Figure 4) are set up on the tank top 4 with optical sights at points E and F. These gauges 7 and 8 are aligned with each other optically and for this purpose the gauge 7 includes an optical telescope (not shown), fixed table, enabling the gauges to be aligned with each other along the line EF, coinciding with the bore line of the engine drive shaft. Each of the gauges 7, 8 supports a respective target 10, 11 supported at an accurately defined distance, below the line EF equal to the respective distance, previously measured, of the axis of the propulsion unit drive shaft from the base surface 6 of the bedplate 5, so that the two targets 10, 11 are located at the distances Y and X respectively above the tank top 4 and are aligned with each other in a datum plate 12 (Figure 2) for the base surface of the bedplate 5. The irregularities in the base surface 6 of the bedplate are shown exaggerated in Figure 2.

Each engine support point on the bedplate 5, indicated by an asterisk in Figure 3, is marked carefully on the tank top 4. With the targets 10 and 11 set up in the datum plane 12 representing the level of the base surface of the bedplate above the tank top 4, an optical sweep is now made in the datum plane by means of a telescope mounted upon a turntable 13 located inside or outside the bedplate area (Figure 3). Height measurements above the tank top 4 (the irregularity of which is exaggerated in Figure 4) are made at each previously marked engine support point by aligning the telescope in turn with each of these points and reading off through the telescope a height on a height measuring gauge such as a graduated scale located at each engine support point in turn. The height measurements thus obtained relate to the height of the datum plane 12 above the tank top at each engine support point, and are corrected by taking into account the actual height of the bedplate 5 at each engine support point, measured by means of a suitable caliper gauge 14 (Figure 2) to give actual clearance heights of the bedplate base surface 6 above the tank top 4 at each engine support point. These clearance heights will be the heights of respective bobbins which have to be located on the tank top 4 at each engine support point to ensure that when the engine bedplate is seated on the tank top the axis of the engine drive shaft will be at the designed shaft centreline height coinciding with line AF. Normally this shaft axis of centreline will be horizontal, but at this stage allowance can be incorporated for deliberate sloping, "hogging" or "sagging" of the engine shaft axis. Allowance can also be made at this stage for deflection or compression of the ship's bottom due to the weight of the propulsion unit.

Examples of the different kinds of bobbins 15 which may be manufactured for each engine support position are illustrated in Figures 5(a), (b) and (c). The bobbin 15 shown in Figure 5(a) has parallel end faces and is designed to support an engine bedplate parallel to the ship's bottom, while the bobbin 15 shown in Figure 5(b) has a bevelled upper surface and is designed to support a bedplate having an inclined base surface, or to support a bedplate on a sloping tank top 4. In each case, the engine support points at which the bobbins are located coincide with vertical stiffeners in the engine bedplate structure, as shown diagrammatically in Figure 5. Figure 5(c) illustrates a multipurpose bobbin 15 having a standard upper portion 16 with a bevelled upper face, designed for re-use, and a lower portion 17 of appropriate height keyed to the reusable upper portion.

To allow for fine height adjustment of each bobbin, illustrated in Figures 5(a) and 5(b) are deliberately manufactured with a height which is a predetermined amount less than the required height, and a standard tinplate shim 18 having a thickness of this amount is affixed to the bottom of the bobbin. If, due to a miscalculation or minor error, the height of the bobbin has to be corrected, it is not necessary to scrap the entire bobbin, but merely necessary to substitute a shim 18 of a different thickness. Further fine height adjustment may be achieved by taking advantage of the fact that in practice the base 6 of the engine bedplate 5 will in general be inclined to the tank top 4, so that by moving the bobbins 15 along the surface of the tank top small height adjustments of the engine bedplate can be achieved.

The bobbins 15 allow the propulsion unit or engine and its bedplate 5 to be dropped into the correct predetermined position in the hull of the ship, before other components have been fitted, and to maintain the engine in its correct position of alignment until the engine is supported and chocked in the usual manner.

A similar procedure is used to predetermine the forward and aft position of the engine or propulsion unit 2 before it is located in the ship. As a first step, the exact distance between the coupling face 20 of the coupling flange of the engine drive shaft (Figure 6) and the aftermost edge of the engine bedplate 5 is measured by means of a suitable mechanical gauge, while the engine and its bedplate are "ashore". The gauge, indicated diagrammatically at 22 in Figure 6, is then located on the tank top 4 in the ship's hull, at the approximate position of the engine shaft coupling. A steel tape or other similar measuring device is then used to measure the distance from the face of the gauge 22 which coincides with the eventual coupling face 20, to the outside of the stern boss 23 in the stern frame 1 through which the propeller shaft will eventually pass. This distance, indicated by H in Figure 6, is measured at a convenient height, usually the height of the bottom dead centre of the stern boss and the bottom of the engine coupling face 20. Having measured the distance H, the position of the gauge 22 is then adjusted in a forward and aft direction so that the eventual distance H is about 10 mm proud of the combined propeller gland and propeller shaft length, thereby leaving about 10 mm on the after face of the stern boss 23 for subsequent machining whilst boring out the stern boss 23 should this be necessary.

Having established the distance H and thereby located the precise position of the coupling face 20 when the engine is eventually fitted, the previously determined distance K from the coupling face 20 to the after edge of the engine bedplate 5 is marked on the tank top 4. A special heavy duty end stopper is next welded to the tank top 4 at a position which is 10 mm less than the distance H from the outside of the stern boss 23. A second end stopper is also welded to the tank top 4 at the forward position of the bedplate 5, the distance between the two stoppers being adjusted to the bedplate length minus 1 mm. The two stoppers define a forward and aft containment position at which the engine bedplate unit will be located as it is lowered into position.

A similar method is used for positioning the propulsion unit and the engine bedplate 5 laterally, that is in a port and starboard direction. The width of engine bedplate is first measured "ashore". A minimum of two pairs of heavy duty port and starboard adjustable stoppers are then welded to the tank top 4, a first pair at the forward end and a second pair at the aft end of the engine position. The width between the port and starboard stoppers of each pair is adjusted so as to be approximately 0.5 to 1 mm less than the engine bedplate width, the stoppers of each pair being set symmetrically on opposite sides of the sight line EF. Plumblines dropped from hangers at points E and F to provide corresponding reference points E1 and F1 at the tank top level (Figure 1). E1 and F1 must be marked before launch.

The engine bed plate 5 is now lowered into a "nest" formed by a minimum of six heavy duty stoppers that is, the forward and aft stoppers and at least four port and starboard stoppers. Fouling of lubricating oil drop pipes and the like is avoided by suitable location of the stoppers.

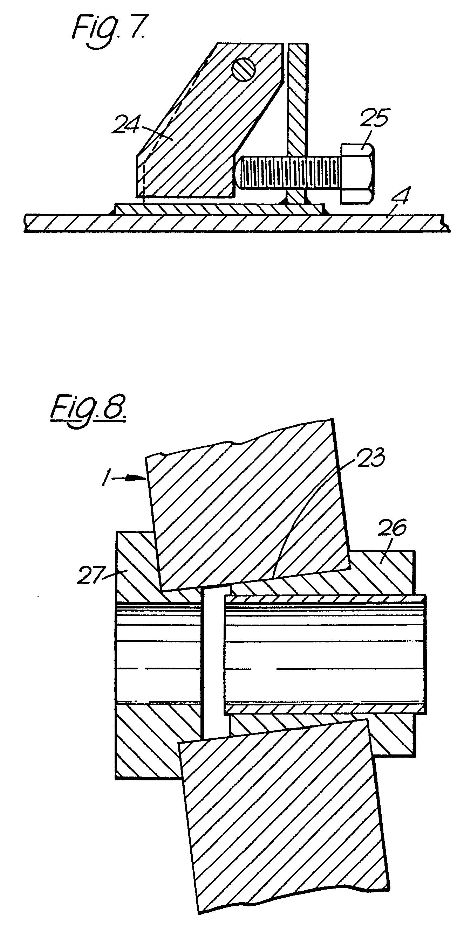

An example of an adjustable stopper is illustrated in Figure 7, comprising a pivoted stop block 24 adjustable by means of a screw 25, the support for the stop block 24 being welded to the tank top 4.

The final and precise positioning of the engine bedplate 5 to ensure that crankshaft axis is aligned with the sight line EF is now carried out, using a trammel type arm and clock gauge, located from the bearing on special telescope fixtures at points E and F. The clock gauge is adjusted to make contact with the engine crankshaft coupling flange or any suitable surface concentric therewith.

Work on the final installation of ancillary fittings, including lubricating oil pipes, water pipes, ladders, pipes, floors and the like can now commence, without waiting for any further alignment work to be carried out.

To provide a means of detecting any vertical change in the engine bedplate position with respect to the tank top during the subsequent engine building stages a series of gauging points are now established between the lower surface of the bedplate and the top surface of the tank top. Dome ended screw-threaded studs are passed through the bedplate lower flange and set to be approximately 26 mm above the tank top. After setting these studs accurately at 26 mm above the tank top with the aid of a 25 mm cube block and feeler gauges, the studs are welded in position, and can be used to make allowance for any deflection of the tank top during the subsequent engine build programme. Thus any changes in the distance between the tips of the studs and the tank top can be monitored and if necessary corrections can be undertaken.

Having set the propulsion unit 2 and the engine bedplate 5 in position on the bobbins 15 the "boring out" of the propeller shaft bearings between the propulsion unit 2 and the stern frame 1 commences, along the line ABCDEF previously established by means of the optical sights. Boring out can proceed either before or after engine positioning.

The sight at position E can be used to establish the shaft axis ABC for the purpose of marking concentric rings on the stern tube bore faces or aft peak bulkheads. These rings to be used when positioning steadies for a boring bar used for boring the stern frame by affixing targets at B and C to be co-axial with the line of sight EA and then substituting the target with a metal disc having a female centre hole. A concentric ring can now be marked on the faces and bulkhead using scribing trammels.

Another use of the sight line EA is to measure any misalignment of the final size of the bored stern frame, enabling allowances to be made for such misalignment by suitably machining the stern bearing tube 26 subsequently located in the bore of the stern frame boss, as illustrated exaggeratedly in Figure 8.

Misalignment of the stern frame boss 23 is shown exaggerated in Figure 8. In addition to the stern bearing tube 26, the outer oil seal, carried by an annular gland carrier 27, is also machined with an eccentric outer surface so as to fit into the stern frame boss 23 while maintaining accurate coaxial alignment with the internal bore of the bearing tube 26, such alignment being checked by mounting a telescope at point E (Figure 1) and checking the alignment through the bore of the bearing tube 26.

For the purpose of making accurate optical alignments by the procedures described above a telescope sight is used which, as illustrated diagrammatically in Figure 4, comprises a rigid support 28 surmounted by a circular bearing ring 29. A table 30 carrying telescope mounts 31 rests on the bearing ring 29, the table 30 having a bevelled lower face 32 which bears against the inner edge of the bearing ring 29 to afford an annular bearing surface.

**Claims**

1. A method of steel ship construction in which adjustable elements are used to adjust the height and alignment of a propulsion machinery component such as an engine bedplate installed in the hull of the ship, characterised in that, when the hull (4) of the ship has been partially completed, the precise location of the propulsion machinery component such as an engine bedplate (5) is predetermined in three dimensions, before the fitting of such component, by making length and height measurements on the component, outside the hull, and measurements in the hull (4) itself, the measurements on the component and in the hull being combined, for example by subtraction, to determine the size and location of forward and aft end stoppers, (22) lateral stoppers (24) and height adjustment elements (15), and in which, following the positioning of the stoppers and height adjustment elements, propeller shafting and ancillary equipment are fitted and aligned in the hull under construction before the final locations and alignment of the propulsion machinery component (5) at the predetermined location.

2. A method as claimed in Claim 1, in which the position of the propulsion machinery component is predetermined after the hull of the ship has been built from the stern to the main deck level for at least two holds or compartments forward from the stern.

3. A method as claimed in Claim 1 or Claim 2, in which optical sights (10, 11) are located at selected positions in the structure at which measurements are to be made and are aligned with each other using an optical instrument (7) mounted upon a table (30) and capable of vertical and horizontal displacement and of tilt adjustment, the table being rotatable for sweeping of the instrument in a plane.

4. A method as claimed in Claim 1, in which, before the component is fitted, at least two pairs of port and starboard adjustable stoppers, (24) are fixed to the hull of the ship (4), in different transverse planes along a sighting line, the distance between the said stoppers being adjusted to be equal to or slightly less than the measured width of the component.

5. A method as claimed in any one of the preceding claims, in which a sighting line (ABCDEF) corresponding to the axis of a propeller shaft or an engine crankshaft is determined by an optical sighting method and an optical sweep is then made in a plane substantially parallel to the sighting line to measure the distances from the sighting line of a number of machinery support positions on the tank top of the ship hull under construction, measurements are made on a support bedplate (5) of the machinery before its installation to establish the height relative to the sighting line of the machinery bedplate at each support position, and bearing height adjustment elements (15) are selected, each having a height determined from said measurements on the support bedplate and from the optical sweep measurements, the said adjustment elements being located at the appropriate support positions to predetermine a correctly aligned position of the machinery upon the subsequent installation of the machinery bedplate on the tank top.

6. A method as claimed in Claim 5, in which the measurements made on the machinery support bedplate before its installation include measurements at forward and aft reference positions (F, E), these measurements being subtracted from the height of the sighting line at the positions measured in the optical sweep to obtain forward and aft reference heights of the bedplate above the tank top (4).

7. A method as claimed in Claim 6, in which optical sights (8, 7) are established at the forward and after reference positions, the aft sight being concentric with the shaft axis, sighting elements (11, 10) being carried by the forward and aft sights and supported at positions corresponding to the forward and aft reference heights of the base above the tank top, an optical sweep of the machinery support positions being made with the said sighting elements to obtain height measurements for each bearing height adjustment element (15).

8. A method as claimed in Claim 5, Claim 6, or Claim 7, in which reference studs or screws are affixed to the lower surface of the support base, projecting a distance towards the upper surface of the tank top (4) such as to be spaced by a common reference distance therefrom upon the initial installation of the support base, measurement of said distance enabling subsequent deflections of the tank top to be monitored.

**Revendications**

1. Procédé de construction d'un navire en acier dans lequel des éléments réglables sont utilisés pour régler la hauteur et l'alignement d'un organe de machinerie de propulsion, comme un socle de moteur installé dans la coque du navire, caractérisé en ce que, quand la coque (4) du navire a été partiellement terminée, la position précise de l'organe de machinerie de propulsion, comme un socle de moteur (5), est prédéterminée en trois dimensions avant le montage de cet organe, en faisant des mesures de longueur et de hauteur sur l'organe à l'extérieur de la coque, et des mesures dans la coque (4) elle-même, les mesures de l'organe et sur la coque étant combinées, par exemple par sous traction, pour déterminer la dimension et la position de butées d'extrémité (22) avant et arrière, de butées latérales (24) et d'éléments (15) de réglage de hauteur et dans lequel, après le positionnement des butées et des éléments réglables en hauteur, la ligne d'arbre d'hélice et l'équipement auxiliaire sont montées et alignées dans la coque en construction avant le positionnement final et l'alignement de l'organe (5) de machinerie de propulsion dans la position prédéterminée.

2. Procédé selon la revendication 1, dans lequel la position de l'organe de machinerie de propulsion est prédéterminée après que la coque du navire a été construite depuis l'étambot jusqu'au niveau du pont principal sur au moins deux cales ou compartiments en avant de l'étambot.

3. Procédé selon la revendication 1 ou la revendication 2, dans lequel des viseurs optiques (10, 11) sont localisés en des positions sélectionnées de la structure, auxquelles des mesures peuvent être faites et sont alignés entre eux en utilisant un instrument optique (7) monté sur une table (30) et susceptible d'un déplacement vertical et horizontal et d'un réglage d'inclinaison, la table pouvant tourner pour balayer l'instrument dans un plan.

4. Procédé selon la revendication 1, dans lequel avant que l'organe soit ajusté, au moins deux paires de butées réglables (24) de babord et de tribord sont fixées à la coque du navire (4) dans des plans transversaux différents le long d'une ligne de visée, la distance entre lesdites butées étant réglée pour être égale ou légèrement inférieure à la largeur mesurés de l'organe.

5. Procédé selon l'une quelconque des revendications précédentes, dans lequel une ligne de visée (ABCDEF) correspondant à l'axe d'un arbre d'hélice ou d'un vilebrequin de moteur est déterminée par un procédé de visée optique, et un balayage optique étant ensuite effectué dans un plan sensiblement parallèle à la ligne de visée pour mesurer les distances à partir de la ligne de visée d'un certain nombre de positions de support de machinerie sur le plafond de ballast de la coque du navire en construction, des mesures étant faites sur un socle support (5) de la machinerie avant son installation pour établir la hauteur par rapport à la ligne de visée du socle de machinerie dans chaque position de support, et des éléments de réglage de hauteur d'appui (15) sont sélectionnés, ayant chacun une hauteur déterminée par lesdites mesures sur le socle support et par des mesures de balayage optique, lesdits éléments de réglage étant placés dans des positions de support appropriées, pour prédéterminer une position alignée correctement de la machinerie à l'installation ultérieure du socle de machinerie sur le plafond de ballast.

6. Procédé selon la revendication 5, dans lequel les mesures faites sur le socle support de machinerie avant son installation comprennent des mesures à des positions de référence avant et arrière (F, E), ces mesures étant soustraites de la hauteur de la ligne de visée aux positions mesurées dans le balayage optique pour obtenir des hauteurs de référence avant et arrière du socle au-dessus du plafond de ballast (4).

7. Procédé selon la revendication 6, dans lequel des viseurs optiques (8, 7) sont établis aux positions de référence avant et arrière, le viseur arrière étant concentrique avec l'axe d'arbre, des éléments de visée (11, 10) étant supportés par les viseurs avant et arrière, et supportés dans des positions correspondant aux hauteurs de référence avant et arrière de la base au-dessus de plafond de ballast, un balayage optique des positions de support de machinerie étant fait avec lesdits éléments de visée pour obtenir des mesures de hauteur pour chaque élément de réglage de hauteur d'appui (15).

8. Procédé selon la revendication 5, la revendication 6 ou la revendication 7, dans lequel des goujons ou des vis de référence sont fixés sur la surface inférieure de la base support, faisant saillie d'une distance vers la surface supérieure du plafond de ballast (4) telle qu'ils en sont espacés d'une distance de référence commune à l'installation initiale de la base support, la mesure de ladite distance permettant de contrôler des déformations ultérieures du plafond de ballast.

## Patentansprüche

1. Verfahren zum Stahlschiffsbau, bei welchem einstellbare Elemente zum Einstellen der Höhe und Ausrichtung eines Antriebsmaschinenteils wie etwa einer im Rumpf des Schiffes montierten Maschinenfundamentplatte verwendet werden, dadurch gekennzeichnet, daß nach teilweiser Vollendung des Schiffsrumpfes (4) der genaue Standort des Antriebsmaschinenteils wie etwa einer Maschinenfundamentplatte (5) vor dessen Einbau in drei Dimensionen vorbestimmt wird, indem Längen- und Höhenmessungen am Maschinenteil außerhalb des Rumpfes sowie Messungen in dem Rumpf (4) selbst vorgenommen werden, wobei die Messungen am Maschinenteil und im Rumpf beispielsweise durch Subtraktion zum Bestimmen der Größe und des Standortes von Vorder- und Achterendstoppern (22), Seitenstoppern (24) und Höheneinstellelementen (15) kombiniert werden, und daß nach dem Positionieren der Stopper und Höheneinstellelemente die Schraubenwellenleitung und Zusatzausrüstungen in dem im Bau befindlichen Rumpf eingebaut und ausgerichtet werden, bevor die endgültige Anbringung und Ausrichtung des Antriebsmaschinenteils (5) am vorbestimmten Standort erfolgt.

2. Verfahren nach Anspruch 1, bei welchem die Position des Antriebsmaschinenteils vorbestimmt wird, nachdem der Rumpf des Schiffes vom Heck zur Hauptdeckhöhe für mindestens zwei Laderäume oder Abteilungen vom Heck aus nach vorn gebaut worden ist.

3. Verfahren nach Anspruch 1 oder 2, bei welchem an ausgewählten Positionen in der Konstruktion, an denen Messungen vorzunehmen sind, optische Zielvorrichtungen (10, 11) angeordnet und miteinander ausgerichtet werden unter Verwendung eines auf einem Tisch (30) montierten, vertikal sowie horizontal versetzbaren und neigungsverstellbaren optischen Instrumentes (7), wobei der Tisch zum Verschwenken des Instrumentes in einer Ebene drehbar ist.

4. Verfahren nach Anspruch 1, bei welchem von dem Einbau eines Maschinenteils mindestens zwei Paare von einstellbaren Backbord- und Steuerbordstoppern (24) am Schiffsrumpf (4) in unterschiedlichen Querebenen längs einer Visierlinie befestigt werden und der Abstand zwischen den Stoppern so eingestellt wird, daß er gleich der gemessenen Breite des Maschinenteils oder etwas kleiner als diese ist.

5. Verfahren nach einem der vorangehenden Ansprüche, bei welchem eine der Achse einer Schraubenwelle oder einer Maschinenkurbelwelle entsprechende Visierlinie (ABCDEF) durch eine optische Visiermethode bestimmt wird und dann in einer zur Visierlinie im wesentlichen parallelen Ebene zum Messen der Entfernungen einer Anzahl von Maschinenhalterungspositionen auf dem Tankoberteil des im Bau befindlichen Schiffsrumpfes ein optischer Schwenk ausgeführt wird, an einer Halterungsfundamentplatte (5) der Maschine vor ihrem Einbau Messungen zum Feststellen der Höhe der Maschinenfundamentplatte relativ zur Visierlinie an jeder Halterungsposition vorgenommen werden, Lagerhöhenjustierelemente (15) gewählt werden, deren jeweilige Höhe aus den Messungen an der Halterungsfundamentplatte und aus den optischen Schwenkmessungen bestimmt wird, und diese Justierelemente an den entsprechenden Halterungspositionen angeordnet werden, um eine richtig ausgerichtete Position der Maschine bei dem anschliessenden Einbau der Maschinenfundamentplatte auf dem Tankoberteil zu bestimmen.

6. Verfahren nach Anspruch 5, bei welchem die Messungen, die an der Halterungsfundamentplatte der Maschine vor ihrem Einbau vorgenommen werden, Meßwerte an Vorder- und Achterreferenzpositionen (F, E) einschließen und diese Meßwerte von der bei dem optischen Schwenk gemessenen Höhe der Visierlinie an den Positionen subtrahiert werden, um Vorder- und Achterreferenzhöhen der Fundamentplatte über dem Tankoberteil (4) zu erhalten.

7. Verfahren nach Anspruch 6, bei welchem optische Zielvorrichtungen (8, 7) an den Vorder- und Achterreferenzpositionen eingerichtet werden, wobei die Achterzielvorrichtung konzentrisch zur Wellenachse ist, Zielelemente (11, 10) von den Vorder- und Achterzielvorrichtungen getragen und an Positionen gehalten werden, die den Vorder- und Achterreferenzhöhen des Fundaments über dem Tankoberteil entsprechen, und eine optischer Schwenk über die Maschinenhalterungspositionen mit dem Zielelementen durchgeführt wird, um Höhenmeßwerte für jedes der Lagerhöhenjustierelemente (15) zu erhalten.

8. Verfahren nach Anspruch 5, Anspruch 6 oder Anspruch 7, bei welchem Referenzbolzen oder -Schrauben an der Unterfläche des Halterungsfundaments befestigt werden, die so weit zur Oberseite des Tankoberteils (4) vorspringen, daß sie hiervon nach dem anfänglichen Einbau des Halterungsfundaments um einen gemeinensamen Referenzabstand entfernt sind, wobei das Messen dieses Abstands das Überwachen anschliessender Ablenkungen des Tankoberteils ermöglicht.

0 015 654

Fig.1.

Fig.2.

Fig.3.

1

**Fig.4.**

**Fig.5.**

(a)  (b)  (c)

**Fig.6.**

*Fig. 7.*

*Fig.8.*